# EUROPÄISCHE PATENTSCHRIFT

(11) **EP 4 206 604 B1**
(45) Veröffentlichungstag und Bekanntmachung des Hinweises auf die Patenterteilung: **11.09.2024**
(21) Anmeldenummer: 22211288.0
(22) Anmeldetag: 05.12.2022
(51) Int. Cl.: G01B 11/22, B60C 11/24

(54) **VERFAHREN ZUR ERMITTLUNG EINER PROFILTIEFE EINES FAHRZEUGREIFENS**
METHOD FOR DETERMINING A TREAD DEPTH OF A VEHICLE TYRE
PROCÉDÉ DE DÉTERMINATION D'UNE PROFONDEUR DE SCULPTURE D'UN PNEU DE VÉHICULE

(30) Priorität: 04.01.2022 DE 102022200030
(43) Veröffentlichungstag der Anmeldung: 05.07.2023
(73) Patentinhaber: Continental Reifen Deutschland GmbH, 30175 Hannover (DE)
(72) Erfinder: Kurz, Martin, 30165 Hannover (DE)
(74) Vertreter: Continental Corporation

(56) Entgegenhaltungen:
- DE-A1- 102008 057 542
- US-A1- 2012 008 148
- US-A1- 2017 052 021

## Beschreibung

Die Erfindung betrifft ein Verfahren zur Ermittlung einer Profiltiefe eines Fahrzeugreifens.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen.

US 2017/0052021 A1 offenbart ein Verfahren zur optischen Ermittlung einer Profiltiefe eines Fahrzeugreifens, wobei die Form von zweistufigen Profiltiefenindikatoren von einer Kamera zur Ermittlung der Profiltiefe des Reifens erfasst wird.

Der Erfindung lag die Aufgabe zugrunde, ein Verfahren bereitzustellen, mit dem die Bestimmung einer Profiltiefe einfach und mit einer hohen Genauigkeit erfolgen kann.

Gelöst wird die Aufgabe durch ein Verfahren mit den folgenden Schritten:
a) Bereitstellen eines Fahrzeugreifens mit einer Profiltiefe,
b) Aufnahme von zumindestens einem Teilbereich vom Reifenprofil des Fahrzeugreifens mit einer Kamera,
c) Automatisierte Ermittlung von Tiefeninformationen von dem aufgenommenen Bild des Teilbereiches der Oberseite des Laufstreifens,
   wobei bei der Aufnahme eine Höhenabmessung eines Profiltiefenindikators erfasst wird und die Höhenabmessung des Profiltiefenindikators als absolute Höhendifferenz genutzt wird, um den absoluten Wert der Profiltiefe zu bestimmen,
d) Ermitteln einer Profiltiefe des Fahrzeugreifens in einem vorgegebenen Bereich des Reifenprofiles.

Ein Vorteil der Erfindung ist insbesondere darin zu sehen, dass mit dem neuen Verfahren die Profiltiefe am Fahrzeugreifen auf einfache Weise und mit einer hohen Genauigkeit ermittelt werden kann.

Das Reifenprofil eines Fahrzeugreifens wird mit einer Kamera aufgenommen. Mit einer Bildanalyse wird automatisiert die Profiltiefe in einem bestimmten Bereich des Fahrzeugreifens ermittelt.

Bei der Aufnahme des Reifenprofils wird darauf geachtet, dass ebenfalls ein Profiltiefenindikator aufgenommen wird, der im Normalfall in einer Umfangsrille angeordnet ist. Der Profilindikator hat standardmäßig eine Höhenabmessung von 1,6 mm gegenüber dem Profilgrund. Bei der Bildanalyse wird die Höhenabmessung des Profilindikators ausgewertet und in Relation gesetzt zu der noch verbleibenden Profiltiefe. Dadurch lässt sich mit einer hohen Genauigkeit die noch verbleibende Profiltiefe im Fahrzeugreifen bestimmen.

Der Halter des Fahrzeuges muss nicht mehr manuell mit einem Profiltiefenmesser die Profiltiefe am Fahrzeug messen. Bei der Kamera kann es sich beispielsweise um eine Kamera von einem Smartphones handeln, mit der ein Teilbereich des Reifenprofils aufgenommen wird. Die Profiltiefe wird ebenfalls automatisiert auf dem Smartphone angezeigt.

In einer vorteilhaften Weiterbildung der Erfindung ist vorgesehen, dass zumindestens an einem Profilklotz eine zusätzliche Farbmarkierung angeordnet ist, die bei der Bildanalyse der Aufnahme genutzt wird, um die Profiltiefe mit einer hohen Genauigkeit zu bestimmen.

Die zusätzliche Farbmarkierung kann dazu dienen, die Genauigkeit bei der Bestimmung der Profiltiefe zu erhöhen. Die Farbmarkierung auf der Seite eines Profilklotzes kann bei beispielsweise anzeigen, dass noch etwa 4 mm Profiltiefe verbleiben, bis der Profilgrund der Umfangsrille erreicht ist.

In einer weiteren vorteilhaften Weiterbildung der Erfindung ist vorgesehen, dass die Kamera eine Kamera von einem Smartphone ist und die Kamerasoftware zur Ermittlung der Tiefeninformationen auf dem Smartphone installiert ist, wobei die ermittelte Profiltiefe auf dem Smartphone angezeigt wird.

Dadurch kann der Halter des Fahrzeuges auf einfache Weise jederzeit die Profiltiefe an einem Fahrzeugreifen ermitteln.

In einer weiteren vorteilhaften Weiterbildung der Erfindung ist vorgesehen, dass die Kamera an einer Halterung angeordnet ist, wobei die Halterung eine automatisierte Führung der Kamera unterstützt, um unterschiedliche Teilbereiche des Reifenprofils aufzunehmen und zu untersuchen.

Eine entsprechende Halterung könnte beispielsweise beim Ermitteln der Profiltiefe in einer Autowerkstatt nützlich sein. Die Halterung könnte an der Felge oder am Radkasten montiert werden, um anschließend den Fahrzeugreifen mit der Kamera automatisiert zu untersuchen.

In einer weiteren vorteilhaften Weiterbildung der Erfindung ist vorgesehen, dass die Kamerasoftware zur Bestimmung der Profiltiefe mit einer Vielzahl von Reifeninformationen unterstützt wird.

Die Reifeninformationen können beispielsweise Informationen enthalten, an welchen Positionen im Reifenprofil im Normalfall die Profiltiefenmessung zu erfolgen hat.

In einer weiteren vorteilhaften Weiterbildung der Erfindung ist vorgesehen, dass die Kamerasoftware bei der Bestimmung der Profiltiefe auf einzelne manuelle Profiltiefenmessungen zurückgreifen kann, die am Reifenprofil erfolgt sind. Dadurch kann die Genauigkeit bei der Ermittlung der Profiltiefe wesentlich erhöht werden.

Anhand eines Ausführungsbeispiels wird die Erfindung im Folgenden näher beschrieben.

Es zeigt:

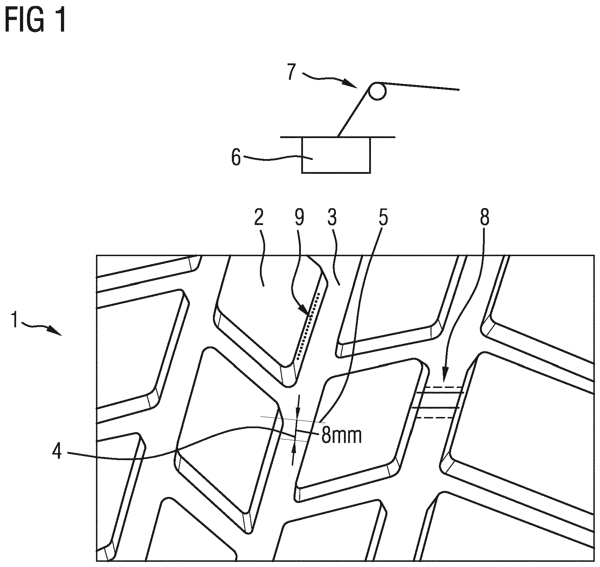

Fig. 1: Ein dreidimensionales Modell von einem Teilbereich eines Reifenprofils.

Die Figur 1 zeigt ein Ausführungsbeispiel.

Die Figur zeigt einen Teilbereich von einem Reifenprofil. Das Reifenprofil umfasst eine Vielzahl von einzelnen Profilklötzen 2 und Umfangsrillen 3.

In einer oder mehreren Umfangsrillen sind eine Vielzahl von Profiltiefenindikatoren 8 angeordnet. Der Profiltiefenindikator 8 ist eine Materialerhebung in einer Umfangsrille, die sich vom Profilgrund der Umfangsrille nach radial außen erstreckt. Die Höhenabmessung eines solchen Profiltiefenindikators beträgt standardmäßig ca. 1,6 mm. Der Profiltiefenindikator zeigt an, wann der Fahrzeugreifen durch einen neuen Fahrzeugreifen ersetzt werden muss.

Mit einer Kamera 6 wird ein Teilbereich des Reifenprofils 1 so aufgenommen, dass ebenfalls der Profiltiefenindikator 8 erfasst wird. Die Höhenabmessung des Profiltiefenindikators 8 wird als absolute Höhendifferenz gegenüber dem Profilgrund der Umfangsrille 3 genutzt. Anschließend wird mit einer Bildverarbeitung und einer Bildanalyse die noch verbleibende Profiltiefe 4 des Fahrzeugreifens ermittelt. Bei diesem Ausführungsbeispiel beträgt die noch verbleibende Profiltiefe beispielsweise 8 mm. Außerdem kann bei der Aufnahme des Reifenprofils ebenfalls die Höhenabmessung einer Farbmarkierung berücksichtigt werden, die seitlich an einem Profilklotz angeordnet ist. Die Farbmarkierung 9 kann beispielsweise anzeigen, dass der Fahrzeugreifen zur Hälfte abgefahren ist und noch eine Profiltiefe von ca. 4 mm aufweist. Diese zusätzliche Farbmarkierung 9 kann als weitere absolute Höhendifferenz bei der Bildanalyse genutzt werden, um die Profiltiefe mit einer möglichst hohen Genauigkeit zu bestimmen.

Mit der Kamera 6 kann außerdem das Reifenprofil 1 aufgenommen und über eine Bildanalyse in ein dreidimensionales Modell umgewandelt werden. Dieses dreidimensionale Modell wird mit der Kamerasoftware der Kamera erstellt, die eine Aufnahme des Reifenprofils gemacht hat. Die Kamera kann mit der integrierten Software aus den aufgenommenen Bildern Tiefeninformationen ermitteln. Beispielsweise wird das Reifenprofil mit Infrarotsensoren abgetastet, die in der Kamera integriert sind. Die Tiefeninformationen werden mit den Bildinformationen gekoppelt, so dass aus diesen Informationen auch die Profiltiefe in der Umfangsrille 3 zwischen den Profilklötzen 2 ermittelt werden kann. Auf der Oberseite zwischen den beiden benachbarten Profilklötzen ist eine Hilfslinie 5 angeordnet. Diese Hilfslinie dient dazu, die Profiltiefe 4 in der Umfangsrille 3 mit einer hohen Genauigkeit zu bestimmen.

Das dreidimensionale Modell mit den Tiefeninformationen wird beispielsweise in einer Cloud-basierten Datenbank abgespeichert. Dadurch können beispielsweise Flottenbetreiber von Fahrzeugen jederzeit auf die Daten zugreifen. Die Flottenbetreiber haben dadurch beispielsweise die Möglichkeit, vorher zu sagen, wann wieder ein Reifenwechsel in der Zukunft erforderlich sein wird.

Über dem dreidimensionalen Modell 1 des Reifenprofils ist schematisch eine Kamera 6 dargestellt, die an einer automatisierten Halterung 7 angeordnet sein kann. Diese Halterung kann beispielsweise an der Fahrzeugfelge oder am Radkasten angeordnet werden, um automatisiert das Reifenprofil oder die Seitenwände des Fahrzeugreifens zu untersuchen. Die Profiltiefe können automatisiert mit einer Applikationssoftware von einem Smartphone angezeigt werden.

### Bezugszeichenliste

- 1: Dreidimensionales Modell eines Teilbereiches des Reifenprofils
- 2: Profilklotz
- 3: Umfangsrille
- 4: Ermittelte Profiltiefe
- 5: Hilfslinie zwischen der Oberseite von zwei Profilklötzen
- 6: Kamera
- 7: Halterung für Kamera
- 8: Tread Wear Indikator bzw. Profiltiefenindikator
- 9: Farbmarkierung an einem Profilklotz

## Patentansprüche

1. Verfahren zur Ermittlung einer Profiltiefe (4) eines Fahrzeugreifens mit einem Laufstreifen mit den folgenden Schritten:
a) Bereitstellen eines Fahrzeugreifens mit einer Profiltiefe (4),
b) Aufnahme von zumindestens einem Teilbereich vom Reifenprofil des Fahrzeugreifens mit einer Kamera (6),
c) Automatisierte Ermittlung von Tiefeninformationen von der Aufnahme des Teilbereiches der Oberseite des Laufstreifens,
wobei bei der Aufnahme eine Höhenabmessung eines Profiltiefenindikators (8) erfasst wird und die Höhenabmessung des Profiltiefenindikators (8) als absolute Höhendifferenz genutzt wird, um den absoluten Wert der Profiltiefe (4) zu bestimmen,
d) Ermitteln der Profiltiefe (4) des Fahrzeugreifens in einem vorgegebenen Bereich des Reifenprofiles.

2. Verfahren nach Anspruch 1,
**dadurch gekennzeichnet, dass**
das zumindestens an einem Profilklotz (2) eine zusätzliche Farbmarkierung (9) angeordnet ist, die bei der Bildanalyse der Aufnahme genutzt wird, um Profiltiefe (4) mit einer hohen Genauigkeit zu bestimmen.

3. Verfahren nach einem der vorhergehenden Ansprüche,
**dadurch gekennzeichnet, dass**
die Kamera (6) eine Kamera von einem Smartphone ist und die Kamerasoftware zur Ermittlung der Tiefeninformationen auf dem Smartphone installiert ist,
wobei die ermittelte Profiltiefe (4) auf dem Smartphone angezeigt wird.

4. Verfahren nach einem der vorhergehenden Ansprüche,
**dadurch gekennzeichnet, dass**
die Kamera (6) an einer Halterung (7) angeordnet ist, wobei die Halterung (7) eine automatisierte Führung der Kamera unterstützt, um unterschiedliche Teilbereiche des Reifenprofils aufzunehmen und zu untersuchen.

5. Verfahren nach einem der vorhergehenden Ansprüche,
**dadurch gekennzeichnet, dass**
die Kamerasoftware zur Bestimmung der Profiltiefe (4) mit einer Vielzahl von Reifeninformationen unterstützt wird.

6. Verfahren nach einem der vorhergehenden Ansprüche,
**dadurch gekennzeichnet, dass**
die Kamerasoftware bei der Bestimmung der Profiltiefe (4) auf einzelne manuelle Profiltiefenmessungen zurückgreifen kann, die im Vorfeld am Reifenprofil erfolgt sind.

## Claims

1. Method for determining a tread depth (4) of a vehicle tyre having a tread, comprising the following steps:
a) providing a vehicle tyre having a tread depth (4),
b) photographing at least one subregion of the tread pattern of the vehicle tyre using a camera (6),
c) automatically determining depth information from the photograph of the subregion of the upper face of the tread,
a height dimension of a tread depth indicator (8) being recorded during the photographing, and the height dimension of the tread depth indicator (8) being used as an absolute height difference in order to ascertain the absolute value of the tread depth (4),
d) determining the tread depth (4) of the vehicle tyre in a predefined region of the tread pattern.

2. Method according to Claim 1,
**characterized in that**
at least one tread block (2) is provided with an additional colour marker (9) that is used during image analysis of the photograph to ascertain the tread depth (4) with a high level of accuracy.

3. Method according to either of the preceding claims,
**characterized in that**
the camera (6) is a camera of a smartphone, and the camera software is installed on the smartphone in order to determine the depth information,
the determined tread depth (4) being displayed on the smartphone.

4. Method according to one of the preceding claims,
**characterized in that**
the camera (6) is arranged on a mount (7), the mount (7) assisting automated guidance of the camera to photograph and examine different subregions of the tread pattern.

5. Method according to one of the preceding claims,
**characterized in that**
the camera software is supported by a large amount of tyre information in order to ascertain the tread depth (4).

6. Method according to one of the preceding claims,
**characterized in that**
the camera software can use individual manual tread depth measurements, taken from the tread pattern in advance, for ascertaining the tread depth (4).

## Revendications

1. Procédé de détermination d'une profondeur de sculpture (4) d'un pneu de véhicule pourvu d'une bande de roulement, comprenant les étapes suivantes :
a) fourniture d'un pneu de véhicule ayant une profondeur de sculpture (4),
b) enregistrement d'au moins une zone partielle de la sculpture de pneu du pneu de véhicule avec une caméra (6),
c) détermination automatisée d'informations de profondeur à partir de l'enregistrement de la zone partielle de la face supérieure de la bande de roulement,
une mesure de hauteur d'un indicateur de profondeur de sculpture (8) étant acquise lors de l'enregistrement et la mesure de hauteur de l'indicateur de profondeur de sculpture (8) étant utilisée comme différence de hauteur absolue pour déterminer la valeur absolue de la profondeur de sculpture (4),
d) détermination de la profondeur de sculpture (4) du pneu du véhicule dans une zone prédéfinie de la sculpture du pneu.

2. Procédé selon la revendication 1,
**caractérisé en ce que**
un marquage de couleur (9) supplémentaire est disposé au niveau d'au moins un bloc de sculpture (2), lequel est utilisé lors de l'analyse d'image de l'enregistrement pour déterminer la profondeur de sculpture (4) avec une grande précision.

3. Procédé selon l'une des revendications précédentes,
**caractérisé en ce que**
la caméra (6) est une caméra d'un smartphone et le logiciel de caméra destiné à déterminer les informations de profondeur est installé sur le smartphone,
la profondeur de sculpture (4) déterminée étant affichée sur le smartphone.

4. Procédé selon l'une des revendications précédentes,
**caractérisé en ce que**
la caméra (6) est disposée sur un support (7), le support (7) assistant un guidage automatisé de la caméra afin d'enregistrer et d'examiner différentes zones partielles de la sculpture de pneu.

5. Procédé selon l'une des revendications précédentes,
**caractérisé en ce que**
le logiciel de la caméra destiné à déterminer la profondeur de sculpture (4) est assisté par une pluralité d'informations de pneu

6. Procédé selon l'une des revendications précédentes,
**caractérisé en ce que**
le logiciel de la caméra peut, lors de la détermination de la profondeur de sculpture (4), avoir recours à des mesures de profondeur de sculpture manuelles individuelles qui ont été effectuées au préalable sur la sculpture de pneu.
